(19) Europäisches Patentamt

European Patent Office

Office européen des brevets

(11) **EP 1 445 018 A1**

(12) **EUROPEAN PATENT APPLICATION**

(43) Date of publication:
**11.08.2004 Bulletin 2004/33**

(51) Int Cl.7: **B01J 23/745**, B01J 23/78, B01J 23/80, B01J 23/83, C01B 3/06

(21) Application number: **04075258.6**

(22) Date of filing: **27.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **05.02.2003 IT MI20030192**

(71) Applicants:
• **ENI S.p.A.**
**00144 Roma (IT)**
• **SNAMPROGETTI S.p.A.**
**20097 San Donato Milanese (Milano) (IT)**

(72) Inventors:
• **Cornaro, Ugo**
**24058 Seriate Bergamo (IT)**
• **Sanfilippo, Domenico**
**20067 Paullo Milano (IT)**

(74) Representative: **De Gregori, Antonella**
**Ing. Barzano & Zanardo Milano S.p.A.**
**Via Borgonuovo 10**
**20121 Milano (IT)**

(54) **Catalytic system and process for the production of hydrogen**

(57) Catalytic system for the production of hydrogen consisting of an active component based on iron and a microspheroidal carrier based on alumina and represented by the following formula

$$[Fe_{x1} M_{x2} Q_{x3} D_{x4} Al_{x5}] O_y$$

wherein

xi     with i=1.5 represent the atomic percentages assuming values which satisfy the equation $\Sigma xi = 100$.

y     is the value required by the oxidation number with which the components are present in the formulate,

x1     is the atomic percentage with which Fe is present in the formulate and ranges from 5 to 80, preferably from 20 to 50,

M     is Cr and/or Mn,

x2     ranges from 0 to 30, preferably from 0 to 10,

Q     is La, Lanthanides (with Ce particularly preferred), Zr or a combination thereof,

x3     ranges from 0 to 30, preferably from 0 to 10,

D     is Mg, Ca, Ba, Co, Ni, Cu, Zn or combinations thereof,

x4     ranges from 0 to 35, preferably from 5 to 25,

x5     is the atomic percentage with which A1 is present in the formulate and ranges from 20 to 95, preferably from 50 to 80.

Fig.1

EP 1 445 018 A1

**Description**

The present invention relates to a catalytic system and a process in which said catalytic system is used for the production of hydrogen from natural gas with the segregation of $CO_2$ in a concentrated stream.

Hydrogen is used both in the oil refining industry (hydrocracking, hydrotreating), and also in petrolchemistry (synthesis of MeOH, DME, $NH_3$, hydrocarbons via Fischer-Tropsch). The reformulation process of gasolines currently in force together with the strictest specifications on product quality and sulfur content in diesel is creating an ever-increasing demand for $H_2$. In the near future, the direct use of hydrogen as an energy carrier will become increasingly extended, due to its potential "clean fuel" characteristics.

Hydrogen can be partly obtained as a by-product of various chemical processes and mainly starting from fossil fuels, coal or natural gas by means of pyrolysis processes or reforming in turn effected with water (steam reforming) or with air (partial oxidation).

The current production methods have the following problems:

- Production from renewable sources is not economically interesting, at the moment.
- The steam reforming reaction of methane gas is endothermic and is generally carried out at very high temperatures.
- The direct partial oxidation of methane to synthesis gas can also take place at a low temperature but the selectivity of the reaction, however, which is difficult to control due to the inevitable presence of the complete combustion reaction, hinders its industrial application.
- A process is now being adopted, which involves the combustion of methane to $CO_2$ and $H_2O$ contemporaneously with the reforming reaction of $CH_4$, which has not reacted, with $H_2O$ and $CO_2$ (autothermal reforming), so that the exothermicity of one reaction is balanced by the endothermicity of the other. In this latter case, there is the disadvantage however of the use of pure oxygen for the combustion of methane, which requires the running of an auxiliary cryogenic unit for the separation of the oxygen from the air.
- The production of $H_2$ from fossil fuels is associated with the formation of $CO_2$, a gas with a greenhouse effect, whose increasing concentration in the atmosphere disturbs the natural climatic cycles.

What is specified above is widely illustrated in the state of the art and reference is made herein to the monograph "Hydrogen as an Energy Carrier" (Carl-Jochen Winter and Joachim Nitsch, ed. Springer-Werlag).

On the basis of what is stated above and with the prospect of using $H_2$ as an energy carrier, a process is greatly requested, which allows $H_2$ to be produced from fossil fuels within the restrictions imposed by an energy use of hydrogen. In particular, this process must have the following requisites:

- a high efficiency
- a high selectivity i.e. it should allow the production of streams of $H_2$ with purity characteristics which make it compatible with the potential use in energy conversion devices such as fuel cells
- the production of $CO_2$ in a concentrated stream and which can therefore be segregated at costs coherent with the economical aspect and ecocompatibility of the process.

The production of hydrogen in a cyclic scheme in which water reacts with the formation of hydrogen and carbon oxides with the reduced form of a solid, in turn obtained by the action of a reducing gas on the oxidized form of the solid itself and in which the solid is recirculated between two distinct zones, is one of the oldest methods used for the production of hydrogen. The process, known as "Steam Iron", was used at the beginning of the Twentieth century for the production of $H_2$ from water and reducing gases, obtained from the gasification of coal and mainly consisting of CO and $H_2$. The redox solid consisted of ferrous minerals (DE-266863). In the sixties', the process was re-proposed by the Institute of Gas Technology (P.B. Tarman, D.V. Punwani; The status of the steam-iron process for $H_2$ production; Proc. Synth. Pipeline Gas Symp., 8, 129, 1976). More recently, the reactivity of various oxides in redox reduction and re-oxidation cycles with water and the consequent production of hydrogen was studied by Otsuka. Among the possible materials Indium, cerium and tin oxides are mentioned (K. Otsuka et al.; J. Catal.; 72, 392, 1981/J. Catal.;79, 493, 1983/Fuel Process.Tech.; 7, 213, 1983). Finally, the production of hydrogen from iron oxides by reaction in a cyclic process with water and syngas is described in V. Hacher, R. Frankhauser et al.; Hydrogen production by the steam-iron process; Journal of Power Sources, 86, 531, (2000).

The Applicant has already proposed (EP-1134187) a technologically advanced and industrially applicable solution for the production of high purity hydrogen from water and natural gas, with the transformation of the carbon of the hydrocarbon substantially into $CO_2$, which can be easily recovered and removed as it is present in a stream at a very high concentration which can reach 100%. Unlike some of the processes previously mentioned above, which generate $H_2$ together with carbon oxides by contact between a hydrocarbon and an oxidized solid, this process is based on the use of an oxide-reducing solid which, by passage between two reaction zones, oxidizes in one of these by the action of water with the production of $H_2$ and is reduced in the other by a suitable hydrocarbon, with the formation of the reduced form of the solid. The thermal balance is closed by introducing a third thermal support zone. The circulation of the solid is advantageously effected using fluidizable microspheroidal solids.

We have now found an active redox formulate, consisting of an active component based on iron and a microspheroidal carrier based on alumina, having fluidizability characteristics which enable it to be advantageously used in the processes for the production of hydrogen already proposed by the applicant.

There are numerous known processes which lead to the direct reduction of solids containing iron in fluid bed processes. For example, processes have been developed which allow the direct reduction of ferrous minerals using syngas, natural gas or $H_2$, as reducing gases. None of these processes is aimed at the production of hydrogen.

The use of iron-based materials in redox cycles for the production of electric energy is also described (T. Mattison, A. Lyngfelt, P.Cho; Fuel; 80, 1953, (2001). The solid is reduced in one zone with methane or natural gas with the production of $CO_2$ in a concentrated stream. In a second zone, the solid is completely re-oxidized with air. Ishida describes, for example, the use of formulates based on oxides of Ni, Co or Fe dispersed in matrixes of $TiO_2$, MgO, $Al_2O_3$, Yttria stabilized Zirconia and $NiAl_2O_4$ spinel (H. Jin, Tokamoto, M.Ishida; Ind. Eng.Chem.Res.; 199, 38, 126).

The following problems arise from what is known.

The reduction of ferrous minerals effected with natural gas and to a lesser degree with syngas, can lead to the deposition of carbonaceous species if the solid is over-reduced. As the reduction proceeds with a mechanism called "shrinking core" i.e. with a reduction which proceeds from the outer layers towards the core of the particle, the outer surface of the particle of material frequently reaches over-reduction levels which are such as to activate the deposition of coal, without adequately reducing the bulk of the particle. This tendency is extremely negative. The deposition of carbonaceous species on the reduced solid causes the production of $H_2$ contaminated by $CO_x$ in the subsequent oxidation step with water and also the external over-reduction of the solid causes an inefficiency in the use of the oxygen of the solid.

It is consequently desirable to be able to disperse the redox solid on a carrier or inside a matrix suitable for favouring a more effective reduction.

Due to the necessity of operating with a fluidizable microspheroidal formulate, the active redox component of the formulate, in addition to a possible dispersing phase, can be premixed and formed directly into microspheres by means of atomizing operations. The operation is onerous and often creates considerable technological difficulties linked to the necessity of controlling the dimension and density of the microspheres. The possibility of using preformed microspheres on which the active component is dispersed with the usual impregnation techniques, is particularly preferred.

Even more preferred is the possibility of dispersing the active component on a carrier based on alumina or which can be directly obtained therefrom. Alumina does in fact have requisites of a technical nature (adequate surface area, thermal and mechanical stability) and also an economical-commercial nature (commercial availability of low cost microspheroidal aluminas) which make it particularly suitable for the application, object of the present invention.

In both cases, it is important for the characteristics of the active redox component to remain unaltered for numerous cycles.

Particularly critical is the activation of reactions in the solid state between the active component and the carrier, for which, the higher the temperature at which the process is carried out, the greater the possibility of this occurring.

The known art mentioned above discloses that reduced iron interacts with numerous carriers, in particular with alumina to give $FeAl_2O_4$, a species which in turn is not capable of being re-oxidized with water. Consequently, although alumina is the ideal carrier, it cannot be effectively used as such in this process.

A method is therefore strongly requested, which allows alumina to be modified, maintaining its morphological characteristics and at the same time reducing its reactivity with reduced iron species.

The embodiment of the process requires a solid which not only has thermodynamic and reactivity characteristics which allow it to be used inside the redox cycle as described above, but must also be able to be recirculated between one reactor and another and fluidized inside the single reactors. The solid must therefore have adequate morphological and mechanical characteristics. These characteristics are defined for example by Geldart (D. Geldart; Powder Technol.; 7, 285 (1973), and 19, 133, (1970)) who introduces a classification of powders on the basis of particle the diameter and density. For the purposes of the present invention, solids are considered as being useful which, according to the Geldart classification, belong to groups A (aeratable) or B (sandlike) and preferably solids which belong to group A.

The availability of a solid which can be reduced with methane or natural gas with high selectivities to $CO_2$ without there being any deposit of carbonaceous species on the solid during the reduction, is particularly critical for the embodiment of the process.

The catalytic system, object of the present invention, consists of an active component based on iron and a microspheroidal carrier based on alumina and is represented by the following formula

$$[Fe_{x1} \, M_{x2} \, Q_{x3} \, D_{x4} \, Al_{x5}] \, O_y \tag{1}$$

wherein

xi with i=1.5 represent the atomic percentages assuming values which satisfy the equation $\sum xi = 100$.

y is the value required by the oxidation number with which the components are present in the formulate,

x1 is the atomic percentage with which Fe is present in the formulate and ranges from 5 to 80, preferably from 20 to 50,

M is Cr and/or Mn,

x2 ranges from 0 to 30, preferably from 0 to 10,

Q is La, Lanthanides (elements with an atomic number ranging from 58 to 71, with Ce particularly preferred), Zr or a combination thereof,

x3 ranges from 0 to 30, preferably from 0 to 10,

D is Mg, Ca, Ba, Co, Ni, Cu, Zn or combinations thereof,

x4 ranges from 0 to 35, preferably from 5 to 25,

x5 is the atomic percentage with which A1 is present in the formulate and ranges from 20 to 95, preferably from 50 to 80.

The catalytic system can advantageously consist of an active component and a carrier and can be represented by the following formula

$$(w)[Fe_f M_m Q_q R_r O_x]*(100-w)[Al_a D_d E_e O_z] \tag{2}$$

wherein

$[Fe_f M_m Q_q R_r O_x]$ represents the active solid component,

w the weight percentage of the active component,

Fe, M, Q, R represent the elements forming the active part,

f, m, q, r the atomic fractions with which these are present in the component,

x is the value required by the oxidation number that

the elements Fe, M, Q, R have in the formulate.

w ranges from 10 to 80%, preferably from 20 to 60%

f ranges from 0.5 to 1, preferably from 0.6 to 1,

M is Cr and/or Mn,

m ranges from 0 to 0.5,

Q is selected from La, Lanthanides (elements with an atomic number ranging from 58 to 71, with Ce particularly preferred), Zr or a combination thereof,

q ranges from 0 to 0.5,

R can be one or more elements selected from A1, D or a combination thereof,

r can also be 0 or at the most from 0 to 0.1

(the presence of one or more of these elements in the active component of the formulate is the result of reactions thereof with the carrier)

and wherein

[Ala Dd Ed Oz] is the carrier on which the active phase is suitably dispersed,

A1, D, E represent the elements forming the carrier,

a, d, e the atomic fractions with which these are present in the carrier,

a ranges from 0.625 to 1,00, preferably from 0.667 to 0.91,

D is an element selected from Mg, Ca, Ba, Zn, Ni, Co, Cu,

d ranges from 0 to 0.375, preferably from 0.09 to 0.333,

E is an element selected from Fe, M, Q, or a combination thereof, e can be 0 or at the most from 0 to 0.1.

(The presence of one or more of these elements in the carrier is the result of reactions thereof with the active component of the formulate).

Before being modified with the active component, the carrier preferably corresponds to the formulation

$$[Al_a D_{(1-a)} O_z] \tag{3}$$

wherein

A1, D represent the elements forming the carrier,

a is the atomic fraction of aluminum, the prevalent component of the carrier

z is the value required by the oxidation number that the elements A1 and D have in the formulate

D is an element selected from Mg, Ca, Zn, Ni, Co, Cu.

Said carrier should have such morphological characteristics as to make it suitable for use in fluid bed reactors.

Particularly preferred is a carrier which, before being modified with the active component, has the formulation

$$Al_aMg_{(1-a)}O_z \tag{4}$$

wherein

a ranges from 0.625 to 0.91 corresponding to a ratio $p=MgO/Al_2O_3$ ranging from 0.2 to 1.2, wherein a preferably ranges from 0.667 to 0.833, corresponding to a ratio $p=MgO/Al_2O_3$ ranging from 0.4 to 1, and structurally consists of

- a compound with a spinel structure which is conventionally indicated as $pMgO*Al_2O_3$, without this representing a limitation as it is known that structures of this type can receive numerous other cations in a lattice position and can have widely defective stoichiometric values.
- optionally MgO in a quantity which increases with a decrease in the value of a, i.e. the higher the $MgO/Al_2O_3$ ratio

and has such characteristics as to make it suitable for use in fluid bed reactors.

Particularly preferred is a carrier which, before being modified with the active component, has the formulation

$$Al_aZn_{(1-a)}O_z \tag{5}$$

wherein

a ranges from 0.625 to 0.91 corresponding to a ratio $p=ZnO/Al_2O_3$ ranging from 0.2 to 1.2, wherein a preferably ranges from 0.667 to 0.833, corresponding to a ratio $p=ZnO/Al_2O_3$ ranging from 0.4 to 1, and structurally consists of

- a compound with a spinel structure which is conventionally indicated as $pZnO*Al_2O_3$, without this representing a limitation as it is known that structures of this type can receive numerous other cations in a lattice position and can have widely defective stoichiometric values.
- optionally ZnO in a quantity which increases with a decrease in the value of a i.e. the higher the $ZnO/Al_2O_3$ ratio,

and has such characteristics as to make it suitable for use in fluid bed reactors.

An object of the present invention also relates to a formulate having the formulation claimed above and additionally containing a further promoter T,

whose quantity is expressed as mg T metal/Kg formulate and indicated with t

wherein T can be selected from Rh, Pt, Pd or a combination thereof

wherein t has values ranging from 1 to 1000 mg metal/Kg formulate, preferably from 10 to 500.

Said promoter can be added directly with the components of the active phase or subsequently on the end formulate with conventional methods and techniques.

The carrier can be easily obtained from commercially available aluminas and has a limited reactivity with reduced iron species which fully favours the efficiency of the redox cycle.

The formulate, consisting of an active redox component and carrier, completely corresponds to the requisites imposed by use in the redox cycle, already proposed by the Applicant. In particular, it has fluidizability characteristics which make it suitable for use in fluid bed reactors.

With respect to the preparation of catalytic systems consisting of an active phase and a carrier, it is known that the dispersion of the active phase on a carrier is normally effected (Applied Heterogeneous Catalysis; J.F. Le Page; Ed. Technip; Paris 1987) by means of wettability impregnation techniques in which the carrier is supplied with a solution containing the precursor of the active phase. The volume of the solution normally coincides with the wettability of the carrier itself. The deposition of the active phase is obtained from the carrier thus treated, by decomposition of the precursor. The necessity of depositing high quantities of active phase is limited by the porous volume and solubility of the precursor of the active phase in the impregnating solution. Repeated applications of impregnating solution can be effected together with intermediate evaporation treatment of the excess solvent or thermal decomposition of the precursor of the active phase. Alternatively, resort is made to wet impregnation in which the carrier is dispersed in a volume of solution in a wide excess with respect to the wettability of the carrier itself and capable of dissolving the precursor of the active phase in the quantity necessary for the desired charge. The deposition of the active phase on the carrier is obtained by evaporation and thermal treatment.

Both methods have numerous disadvantages among which the necessity of having to operate batchwise or poor homogeneity in the deposition of the active phase.

We have developed a preparation process which we have called Impregnation in a Stationary State (ISS), which allows the active phase to be deposited on a preformed carrier with morphological characteristics which make it suitable for operating in a fluidizable bed reactor (microspheroidal solid).

The process for the preparation of the catalytic system described above, which forms a further object of the present patent application, comprises:

- modifying a microspheroidal alumina by means of atomization on said microspheroidal alumina of an impregnating solution, preferably aqueous, containing one or more of the elements D, selected from Mg, Ca, Ba, Co, Ni, Cu and/or Zn, maintaining said alumina at such a temperature as to allow the contemporaneous evaporation of the excess solvent and by subsequent thermal treatment at a temperature ranging from 500 to 900°C, preferably from 700 to 800°C, obtaining said modified alumina, structurally consisting of a compound which in some cases can have a spinel structure and possibly at least one oxide of the element D;
- further modifying the modified alumina by means of atomization on said modified alumina of an impregnating solution, preferably aqueous, containing Fe and optionally the element M, selected from Cr and/or Mn, and/or the element Q, selected from La, Lanthanides and/or Zr, maintaining said modified alumina at such a temperature as to allow the contemporaneous evaporation of the excess solvent and by subsequent thermal treatment at a temperature ranging from 500 to 900°C, preferably from 700 to 800°C, obtaining the desired catalytic system.

The procedure can be carried out in a heated container or in a reactor maintaining the carrier fluidized. In the preparation in the container, for example, the following procedure can be adopted:

The alumina is charged into a rotating container. The solution containing a soluble precursor of the active phase is atomized onto the alumina. A volume of solution is fed, corresponding to 70-80% of the wettability volume of the alumina. At this point, the container is heated, without interrupting the feeding of the solution, regulating the flow-rate of the solution so that the temperature of the alumina mass is maintained at a temperature ranging from 90-150°C. By suitably regulating the addition rate of the solution and the heat supplied to the solid mass, a stationary state is reached between the mass of water added and the mass of evaporated water. Under these conditions, the concentration of solute in the alumina pores progressively increases until the saturation point is reached, in correspondence with which the deposition of the solute inside the alumina pores is initiated and subsequently continued.

With respect to the usual procedures, the method claimed allows the continuous charging of considerable quantities of active phase on a microspheroidal carrier, when the pore volume of the latter or the solubility of the precursor of the active phase represents a limitation to the quantity of active phase which can be charged. The active phase is homogeneously deposited. The morphology of the carrier is not modified. These advantages and specific characteristics are particularly important for the preparation of the formulates and carriers of the present invention.

A particularly preferred version of the process is now selected, in which the reducing agent is methane or natural gas, wherein the solid is based on iron and the production of hydrogen is effected by means of a cyclic sequence of reactions which are hereafter defined as "redox cycle".

The process for the production of hydrogen, which forms a further object of the present invention, comprises the following operations:

- oxidation of a solid in a first reaction zone (R1) in which water enters and $H_2$ is produced;
- heat supply by exploiting the heat developed by further oxidation of the solid with air in a supplementary thermal support unit (R3);
- passage of the oxidized form of the solid to a reaction zone (R2) into which a hydrocarbon is fed, which reacts with said oxidized form of the solid, leading to the formation of its combustion products; carbon dioxide and water;
- recovery of the reduced form of the solid and its feeding to the first reaction zone (R1);

the solid, the catalytic system described above and the three zones (R1), (R2) and (R3) being connected by transport lines (10), (9) and (8) which send:

- the reduced solid leaving the second reaction zone (R2) to the first reaction zone (R1) (10);
- the partially oxidized solid to the supplementary thermal support unit (R3) (9);
- the heated solid back to the second reaction zone (R2) (8).

The active part of the solid involved in the cycle of reactions passes cyclically through different oxidation states and is represented with the following notation:

MOa     Solid completely oxidized in air
MOo     Solid partially oxidized in air,

wherein the average stoichiometric coefficient o can have values ranging from w to a

$MO_w$     Solid oxidized in water
$MO_r$     Solid reduced in hydrocarbon

wherein the oxidation state of the material is defined by the stoichiometric coefficients a, o, w, r among which the following ratio is valid

$$a \geq o \geq w > r$$

These coefficients are defined as a ratio (g atoms of O/g atom of Metal) i.e., when the active redox solid consists, excluding oxygen, of a mixture of elements, each present with its own atomic fraction and the sum of the atomic fractions being equal to 1, the coefficients a, o, w, r are defined as a ratio (g atoms of O/g moles of mixture of elements forming the active component of the solid).

These coefficients therefore have the meaning of the average oxygen content, i.e. the average oxidation state of the solid.

The redox cycle is made up of three steps which are described hereunder. [O] indicates the oxygen species exchanged by the solid equivalent to $1/2 O_2(g)$.

• Reduction with a hydrocarbon

The solid is reduced with a hydrocarbon.

The transformation which involves the solid is $MO_o \rightarrow MO_r$

In this transformation, the solid releases the quantity δr of oxygen wherein δr is defined as follows:

$$\delta r = (o-r) \qquad [\text{g O atoms/g M atom}]$$

The reaction is then appropriately indicated as

$$MOo \rightarrow MO_r + \delta r \, [O]$$

• Oxidation with water

The solid reduced in the previous step, $MO_r$, is treated with water which partially re-oxidizes the solid and releases $H_2$

The transformation which involves the solid is

$$MO_r \rightarrow MO_w$$

In this transformation, the solid acquires from the water the quantity δw of oxygen wherein δw is defined as follows:

$$\delta w = (w-r) \qquad [\text{g O atoms/g M atom}]$$

The reaction which involves the solid is then appropriately indicated as

$$MO_r + \delta w[O] \rightarrow MO_w$$

• Oxidation with air

The solid oxidized with water in the previous step, $MO_w$, is further oxidized with air.

The transformation which involves the solid is

$$MO_w \rightarrow MO_o$$

The transformation proceeds with an advancement degree $\varepsilon$ wherein $0 < \varepsilon < 1$.

The coefficient value o is defined as follows

$$o = (a-w) \; \varepsilon + w$$

the following disparities are therefore valid Advancement degree $\varepsilon$     $0 \leq \varepsilon \leq 1$

Stoichiometric coefficient o     $w \leq o \leq a$.

In this transformation the solid acquires from the air the quantity $\delta o$ of oxygen wherein $\delta o$ is defined as follows

$$\delta o = (o-w) = [(a-w)\varepsilon + w]-w = (a-w)\varepsilon \qquad \text{[g O atoms/g M atom]}$$

Consequently, depending on the advancement degree $\varepsilon$, $\delta o$ has values within the range of $0 \leq \delta o \leq (a-w)$.

In particular, when $\varepsilon = 0$ $\delta o = 0$ and therefore the solid maintains the oxidation degree reached in the previous oxidation phase with water.

When $\varepsilon - 1$     $\delta o = (a-w)$ and consequently the re-oxidation with air continues until it reaches the highest oxidation degree.

The reaction which involves the solid is thus appropriately indicated as

$$MO_w + \delta o[O] \rightarrow MO_o$$

The materials, object of the present invention, can be particularly advantageously applied if used for the production of hydrogen from natural gas with the segregation of $CO_2$ in a concentrated stream.

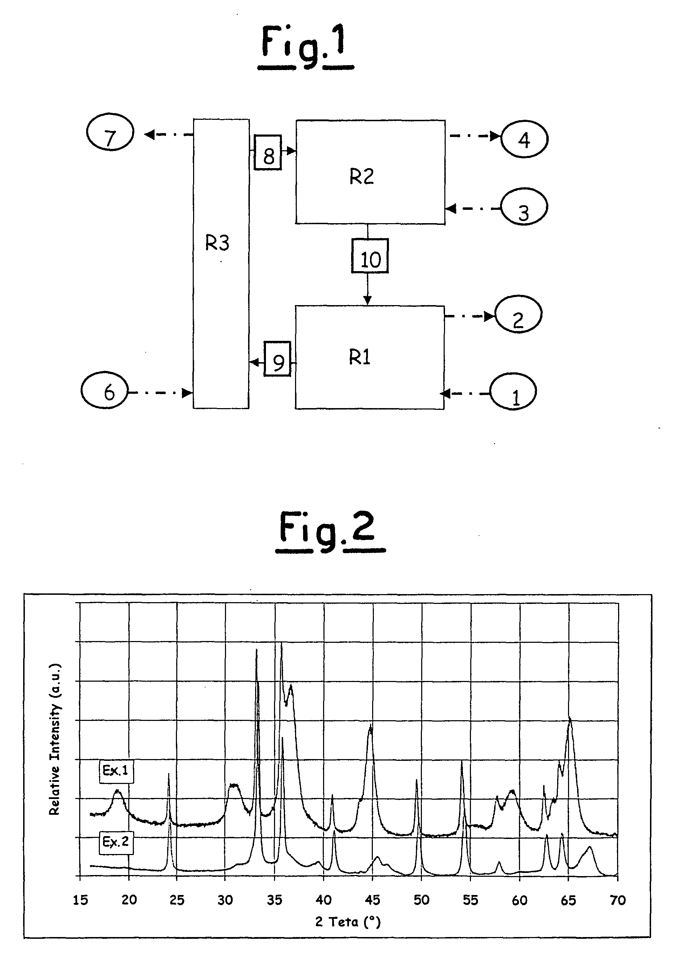

A detailed description follows of the process scheme, referring to the drawing provided in Figure 1.

R2 represents a reactor into which a hydrocarbon is fed (for example methane) and the solid is reduced.

R1 represents a reactor in which the reduced solid coming from R2 is oxidized with water to an intermediate oxidation state with the production of $H_2$.

R3 represents the supplementary thermal support unit in which the solid oxidized with water is further oxidized with air up to the final oxidation degree which, in relation to the advancement degree $\varepsilon$ of the reaction can:

- coincide with the oxidation state of the solid coming from R1 ($\varepsilon = 0$)
- coincide with the maximum oxidation state which the solid can reach in air under the specific conditions in which the unit R3 operates ($\varepsilon = 1$)
- be within the two previous limits with an advancement degree within the range of $0 < \varepsilon < 1$.

Methane is fed (line 3) to the reaction zone R2 and its combustion products are obtained: carbon dioxide and water (line 4).

Water enters the reaction zone R1 (line 1) and $H_2$ is produced (line 2). Air (line 6) is fed to the supplementary thermal support unit R3, which is discharged as impoverished air through line (7).

The scheme is completed by the transport lines which connect the three above-mentioned zones.

The hot solid oxidized in the thermal support unit (R3) is sent to the reduction reactor (R2) through line (8).

The reduced solid is sent from the reduction reactor (R2) to the $H_2$ production reactor (R1) through line (10).

The solid oxidized with water is sent from the reactor (R1) to the reactor (R3) through line (9).

The reactions which take place in the three reactors and the relative reaction heat values can be represented as follows:

Reactor 2 for the reduction of the solid

$$CH_4 + 4O \rightarrow CO_2 + 2H_2O \qquad \Delta H_2, g = -191.7 \text{ kcal/moleCH}_4$$

$$(4/\delta r)[MO_o \rightarrow MO_r + (\delta r[O] \qquad \Delta H_2, s = \text{ kcal/mole M}$$

$$\text{--------------------------------}$$

$$CH_4 + (4/\delta r)MO_o \rightarrow (4/\delta r)MO_r + CO_2 + 2H_2O$$

$$\Delta H_2 = \Delta H_2, g + (4/\delta r)\ \Delta H_2, s$$

Reactor 1 for oxidation with water of the solid coming from reactor 2

$$4\delta w/\delta r\ [H_2O \rightarrow H_2 + [O] \qquad \Delta H_1, g = 57.8 \text{ kcal/moleH}_2O]$$

$$4/\delta r \quad [MO_r + \delta_w[O] \rightarrow MO_w \qquad \Delta H_1, s = \text{ kcal/moleM}]$$

$$\text{---------------------------------------}$$

$$(4\delta w/\delta r)\ H_2O + (4/\delta r)MO_r \rightarrow (4/\delta r)MOw + (4\delta w/\delta r)\ H_2$$

$$\Delta H_1 = 4\delta w/\delta r\ \Delta H_1, g + (4/\delta r)\ \Delta H_1 s$$

Reactor 3 for thermal support in which the solid coming from reactor 1 is oxidized in air

$$4/\delta r\ [MO_w + \delta o[O] \rightarrow MO_o \qquad \Delta H_3, s = \text{ kcal/moleM}]$$

$$\text{--------------------------------------}$$

$$4\ \delta o/\delta r[O] + 4/\delta r\ MO_w \rightarrow 4/\delta r\ MO_o$$

or, if we remember that $[O] = 1/2O_2$

$$(2\delta o/\delta r)O_2 + (4/\delta r)MO_w \rightarrow (4/\delta r)MO_o$$

$$\Delta H_3 = 4/\delta r\ \Delta H_3, s$$

The overall equation which represents the stoichiometry of the cycle is obtained by summing the equations obtained for the reactor R2, R1 and R3:

$$CH_4 + (4/\delta r)MO_o \rightarrow (4/\delta r)MO_r + CO_2 + 2H_2O$$

$$(4\delta w/\delta r)\ H_2O + (4/\delta r)MO_r \rightarrow (4/\delta r)MO_w + (4\delta w/\delta r)\ H_2$$

$$(2\delta o/\delta r)O_2 + (4/\delta r)MO_w \rightarrow (4/\delta r)MO_o$$

$$-------------------------------------------$$

$$CH_4 + [(4\delta w/\delta r)-2]H_2O + (2\delta o/\delta r)O_2 \rightarrow CO_2 + (4\delta w/\delta r)\ H_2 \quad \underline{equa\text{-}tion\ (I)}$$

The thermal tonality of the cycle is obtained by summing the enthalpies of the three reactions and remembering that, as the solid returns to its initial state at the end of the cycle, the contribution of the reaction enthalpies of the solid must be equal to 0

$$\Delta H_2 = \Delta H_{2,g} + (4/\delta r)\ \Delta H_{2,s} =$$

$$\Delta H_1 = (4\delta w/\delta r)\ \Delta H_{1,g} + (4/\delta r)\ \Delta H_{1,s}$$

$$\Delta H_3 = 4/\delta r\ \Delta H_{3,s}$$

$$-------------------------------------------$$

$$\Delta H_{tot} = [\Delta H_{2,g} + 4\delta w/\delta r\ \Delta H_{1,g}] \quad \underline{equation\ (II)}$$

The redox cycle described above can be advantageously effected by segregating the three reaction steps in three different reactors between which the solid is recirculated by pneumatic transportation. The three reactors are constructed and dimensioned so as to optimize the interaction between the circulating solid phase and the gas phase and to optimize the efficiency of the whole cycle expressed as moles of $H_2$ produced/mole of methane fed.

Some illustrative but non-limiting examples are provided for a better understanding of the present invention.

EXAMPLES

Description of the experimental apparatus and reactor tests.

The oxygen exchange properties of the solids prepared are measured in the reactor where the reactions of the process scheme, object of the present invention, are reproduced, and thanks to which it is possible to produce hydrogen from natural gas with the segregation of $CO_2$ in a concentrated stream.

4 cc of solid are charged into a quartz reactor (diameter 1 cm with a thermocouple in a co-axial sheath). The test consists of a reduction step with methane, an oxidation step with water and a re-oxidation step in air. The gases fed are respectively

Reduction: pure $CH_4$

Oxidation with water: $N_2$ saturated in $H_2O$ ($H_2O$ approx.15-20% vol.);

Oxidation in air: air

10 Ncc/min of gas are fed, corresponding to a GHSV of 150 $h^{-1}$ or a contact time of 24 seconds. The test is carried out at atmospheric pressure plus pressure drops of a negligible entity.

In the reduction phase with methane, pure $CH_4$ is fed. Samples are taken of the effluents after 2 minutes, 3 and 8 minutes and analyzed by means of a gas chromatograph. As the analytical times do not allow the sample to be kept continuously on stream, the solid is maintained in a stream of $N_2$ between one sampling and another. The instantaneous and integral value of the effluent moles of $CO_x$, $H_2O$, $H_2$ are obtained from GC analyses. From these the instantaneous and integral value of oxygen extracted from the solid is calculated.

In the oxidation phase with water nitrogen saturated in $H_2O$ (approx. 15-20% vol.) is fed. The oxidation with water is followed, after separation of the excess water, by a TCD detector which continuously measures the concentration of

$H_2$. The signal integrated with a suitable calibration factor, allows the mmoles of $H_2$ produced to be calculated as well as, if the stoichiometric value $H_2O \rightarrow H_2 + [O]$ is known, the moles of O supplied to the solid by the water.

In the oxidation phase with air, air is fed and the effluents are analyzed. Between one analysis and another, the sample is kept in a stream of inert gas. The $O_2$ slip indicates the completion of the oxidation. With a known flow-rate fed and by measuring the time at which the $O_2$ slip is observed, the quantity of oxygen absorbed by the solid in oxidation, is calculated.

Definition of the magnitudes indicated in the tables.

The performances of the solid are defined by the following magnitudes:

dO: g Oxygen extracted/100 fresh solid

R%: reduction degree % of the solid, defined as R%=dO/dOmax

wherein dOmax = (g O extracted in the reduction $Fe_2O_3 \rightarrow$ metallic Fe/100g of fresh solid). The magnitude indicates the degree of reduction of the solid on a scale ranging from 0 (oxidized solid) to 1 the solid in which all the iron is reduced to metallic Fe.

$H_2/CO_x$: molar ratio in the effluents. The ratio is indicative of the trend of the reduction reaction. It varies from 0 to an infinite value. It has the value of 0 when the reduction proceeds to $CO_2$ and $H_2O$, it has the characteristic value of 2 when the reaction proceeds to CO and $H_2$, it tends towards an infinite value when the reaction proceeds with the deposition of C and the development of $H_2$.

dOw: Oxygen exchanged by the reduced solid with methane in the oxidation step with water. dOw = (g O released from water/100 g oxidized solid). The molar quantity of oxygen released from the water to the solid is stoichiometrically equivalent to the $H_2$ produced, with the assumption that the only reaction on the solid is:

$$MO_r + (\delta w) H_2O \rightarrow MOw + \delta wH_2 \quad \delta w = (w-r)$$

dOa: Oxygen exchanged by the solid oxidized with water in the oxidation step with air. dOa - (g O released from the air/100 g of solid oxidized).

Efficiency indexes and productivity

PH: hydrogen productivity, measured in $NIH_2/Kg$ oxidized solid.

PH = dOw/16*22, 414*10 It is directly linked to the oxygen exchanged in oxidation with water

EO: Efficiency factor in the use of oxygen in the redox phase EO = dOw/dO. The dO value, unless there are experimental errors, coincides with the sum dOw+dOa. The EO parameter represents the fraction of oxygen exchanged in the reaction with water and is therefore useful for the production of hydrogen referring to the total quantity of oxygen extracted, consequently linked to the methane consumption.

EXAMPLE 1

500 g of microspheroidal gamma alumina are weighed. A solution containing 1016.36 g of $Mg(NO_3)_3 \cdot 6H_2O$ is prepared in the volume of water necessary for obtaining a 2M solution. The alumina is charged into a container which is rotated. The solution containing the magnesium is fed by means of a peristaltic pump to a nozzle where it is atomized with compressed air onto the alumina. A volume of solution corresponding to 70-80% of the volume of the wettability of the alumina, is fed. At this point, without interrupting the feeding of the solution, the container is heated, regulating the flow-rate of the solution so that the temperature of the alumina mass is maintained at a temperature ranging from 90-150°C. By suitably regulating the addition rate of the solution and heat supplied to the solid mass, a stationary state is reached between the mass of water added and the mass of water evaporated. Under these conditions, the concentration of solute in the alumina pores progressively increases until it reaches the saturation point at which point the deposition of the solute initiates inside the pores of the alumina itself, which subsequently continues at a constant rate. The procedure is hereafter referred to as "Impregnation in the Stationary State" (ISS). At the end of the addition of the solution, the damp solid is dried at 120°C for a night and thermally treated in a muffle in a light stream of air, with a temperature program which comprises a final step at 800°C. The solid, characterized by means of X-ray Diffraction, proves to consist of MgO and a phase of the spinel type which for the sake of simplicity will be indicated as $MgAl_2O_4$ without there being any limitation in this respect, as it is known that structures of this type can receive a wide range of other cations in latticed positions and can have widely defective stoichiometric values. The solid has the composition (MgO.29AO.71O1.36), it maintains the microspheroidal characteristics of the starting alumina and is used as carrier in the subsequent deposition in active phase which is carried out as follows.

300 g of the solid previously obtained are weighed and placed in a container. A solution containing 650.54 g of $Fe(NO_3)_3 \cdot 9H_2O$ is prepared in the volume of water necessary for obtaining a 2M solution. The solution containing iron is applied with the Impregnation in the Stationary State method described above. At the end of the addition of the solution the damp solid is dried at 120°C for a night and thermally treated in a muffle under a light stream of air, with a temperature program which comprises a final step at 800°C.
The solid has the following composition
30% wt (FeO 1.5) * 70% (MgO.29A0.711O1.36)

EXAMPLE 2

300 g of the microspheroidal delta alumina are weighed. A solution containing 650.54 g of $Fe(NO_3)_3 \cdot 9H_2O$ is prepared in the volume of water necessary for obtaining a 2M solution. The alumina is charged into a container which is rotated. The solution containing iron is applied with the Impregnation in the Stationary State method described in the previous example. At the end of the addition of the solution the damp solid is dried at 120°C for a night and thermally treated in a muffle under a light stream of air, with a temperature program which comprises a final step at 800°C.
The solid has the following composition
30% wt (FeO 1.5) * 70% (AlO 1.5)

EXAMPLE 3: Characterization

The solids prepared as described in Examples 1 and 2 are subjected to XRD characterization, of which the result is indicated in figure 2.
Both prove to consist of $Fe_2O_3$ and a second phase which, in the solid 2 is a delta alumina wherein in the solid 1 it is a phase with a spinel structure which for the sake of simplicity will be indicated as $MgAl_2O_4$ without there being any limitation in this respect, as it is known that structures of this type can receive a wide range of other cations in latticed positions and can have widely defective stoichiometric values.

EXAMPLE 4: Loop redox performances

The solid described in Example 1, object of the present invention, which XRD measurements define as a hematite compound dispersed on a carrier of the spinel type, is compared with the solid prepared as described in Example 2, which, according to XRD measurements, proves to consist of hematite dispersed on alumina. The two materials are subjected to a catalytic test using the procedure described above. The results obtained are indicated in the following table.

| Ex. Composition | dO | R% | $H_2/CO_x$ | $dO_w$ | $dO_a$ | PH | EO |
|---|---|---|---|---|---|---|---|
| | | | | | | NIH2/kgcat | |
| 1 30% wt (FeO1.5)*70%(Al0.71 Mg0.29O1.36) | 2.08 | 0.23 | 1.44 | 1.27 | 0.86 | 17.8 | 0.60 |
| 2 30% wt (FeO1.5) * 70%(AlO1.5) | 2.63 | 0.29 | 1.43 | 0.5 | 2.43 | 7.0 | 0.17 |

After 8 minutes of reduction with methane, although a slightly lower oxygen extraction is obtained for solid 1 with respect to solid 2 (dO 2.08 vs. dO 2.63), the reduction trend is substantially analogous, as demonstrated by the $H_2/CO_x$ ratio measured in the effluents.
In the re-oxidation step with water, the solid, object of the present invention, shows a much higher reactivity corresponding to a greater productivity of hydrogen. The oxygen fraction re-acquired with air is consequently lower.
The results can be interpreted by assuming that in the reduction step of hematite, Fe(II) is removed by the alumina in the case of solid 2, forming a spinel, which, for the sake of simplicity, will be indicated as $FeAl_2O_4$, which is not capable of being re-oxidized by water. Vice versa, in the reduction of solid 1, the reduction can proceed without the Fe(II) reacting with the carrier as this is already present in the form of a spinel, which, for the sake of simplicity, will be indicated as $MgAl_2O_4$ and it is therefore not capable of receiving further Fe(II) in the structure. All the Fe(II) formed is consequently capable of reacting with water, re-oxidizing to magnetite $Fe_3O_4$.
This difference in behaviour is demonstrated in a substantial difference in the EO parameter which measures the efficiency in the oxygen cycle. Solid 1 with respect to solid 2 shows an excellent efficiency i.e. a greater fraction of oxygen lost in the reduction is recuperated in the oxidation step with water in which hydrogen is produced.
It is therefore evident that the solid, object of the present invention, has the following advantages:

greater hydrogen productivity
greater efficiency in the oxygen cycle.

EXAMPLE 5

Preparations

A series of solids is prepared, consisting of hematite deposited on carriers obtained by the modification of gamma alumina with an increasing Mg charge. For the preparation of the carriers, the following procedure is adopted. 30 g of microspheroidal gamma alumina are weighed. A solution is prepared, containing the quantity of Mg $(CH_3COO)_2*4H_2O$ indicated in the table in the amount of water necessary for obtaining a 2M solution. The alumina is placed in a pear-shaped flask. The magnesium solution and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the table.

|  | $Mg(CH_3COO)_2*4H_2O$ g | Composition | $MgO/Al_2O_3$ |
|---|---|---|---|
| ex.5.1_s | 69.37 | Al0.645Mg0.355O1.323 | 1.10 |
| ex.5.2_s | 51.17 | Al0.712Mg0.288O1.356 | 0.81 |
| ex.5.3_s | 41.06 | Al0.755Mg0.245O1.377 | 0.65 |
| ex.5.4_s | 31.55 | Al0.800Mg0.200O1.400 | 0.50 |
| ex.5.5_s | 0 | Al1O1.5 | 0.00 |

The carriers obtained are characterized by means of XRD and, with the exception of the solid 5.5_s, which maintains the gamma-alumina structure, prove to prevalently consist of a spinel phase which, for the sake of simplicity, will be indicated as $MgAl_2O_4$ with the presence of an MgO phase in a quantity which increases with an increase in the ratio of MgO/ $Al_2O_3$ used in the preparation. The materials thus prepared and characterized are adopted as a carrier of $Fe_2O_3$.

For the preparation of the solids, the following procedure is adopted:

30 g of the carrier previously prepared, are weighed. A solution is prepared, containing 65.054 g of Fe $(NO_3)_3*9H_2O$ in the amount of water necessary for obtaining a 1.5 M solution. The alumina is placed in a pear-shaped flask. The iron solution and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the table.

|  | Composition |
|---|---|
| ex.5.1 | 30%FeO1.5*70%Al0.645Mg0.355O1.323 |
| ex.5.2 | 30%FeO1.5*70%Al0.712Mg0.288O1.356 |
| ex.5.3 | 30%FeO1.5*70%Al0.755Mg0.245O1.377 |
| ex.5.4 | 30%FeO1.5*70%Al0.800Mg0.200O1.40 |
| ex.5.5 | 30%FeO1.5*70%Al1O1.5 |

Loop redox performances

The solids described in Examples 5.1 to 5.4, which XRD measurements describe as mainly consisting of hematite compounds dispersed on a carrier of the spinel type, are compared with the solid prepared as described in Example 5.5, which XRD measurements reveal to consist of hematite dispersed on alumina. The materials are subjected to a catalytic test with the procedure described above. The results obtained are indicated in the following table:

| Solid | Composition | dO | R% | H2/COx | dow | dOa | PH NlH2/kgcat | EO Ow(Ow/Oa) |
|---|---|---|---|---|---|---|---|---|
| ex. 5.1 | 30%FeO1.5*70%Al0.645Mg0.355O1.323 | 1.58 | 0.18 | 1.33 | 1.43 | 0.86 | 20.03 | 0.62 |
| ex. 5.2 | 30%FeO1.5*70%Al0.712Mg0.288O1.356 | 2.63 | 0.29 | 1.15 | 1.59 | 1.04 | 22.27 | 0.60 |
| ex. 5.3 | 30%FeO1.5*70%Al0.755Mg0.245O1.377 | 2.58 | 0.29 | 1.09 | 1.15 | 1.2 | 16.11 | 0.49 |
| ex. 5.4 | 30%FeO1.5*70%Al0.800Mg0.200O1.40 | 2.37 | 0.26 | 1.35 | 0.88 | 1.47 | 12.33 | 0.37 |
| ex. 5.5 | 30%FeO1.5*70%Al1O1.5 | 2.27 | 0.25 | 1.15 | 0.64 | 2.02 | 8.97 | 0.24 |

from which it can be observed that:

The modification of γ-alumina by the progressive addition of MgO and subsequent addition of 30% of $Fe_2O_3$ causes a progressive improvement in the performances of the solid.

In particular, the following observations can be made:

A progressive increase in the PH, productivity of $H_2$ and EO, efficiency of use of the oxygen exchanged, obtaining compositions in which the Magnesium is present in the carrier with an atomic fraction of 0.288 corresponding to a ratio $\rho=MgO/Al_2O_3=0.81$. An excessive charge of MgO causes a collapse in the activity of the solid in the reduction reaction with methane as shown by the low value of oxygen extracted in the reduction do.

The example allows a composition range to be identified which is useful in the spinel component of the solid [Aa Dd Ee Oz].

In particular, ignoring the presence of contaminants E and therefore assuming e = 0, the formula which represents the composition of the carrier becomes AlaMg(1-a)Oz. Useful a values 0.625 < a < 0.91; Optimal values 0.667 < a < 0.833

## EXAMPLE 6

Preparations

A series of solids is prepared, consisting of hematite deposited on carriers obtained by the modification of gamma alumina with an increasing Zn charge. For the preparation of the carriers, the following procedure is adopted. The quantity of microspheroidal gamma alumina indicated in the table is weighed. A solution is prepared, containing the quantity of $Zn(NO_3)_2*4H_2O$ indicated in the table in the amount of water necessary for obtaining a 2M solution. The alumina is placed in a pear-shaped flask. The zinc solution and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the table.

| | Zn(NO3)2*6H2O g | gamma Al2O3 g | Composition | nO/Al2O3 |
|---|---|---|---|---|
| ex.6.1_s | 64.899 | 22.250 | Al0.667Zn0.333O1.333 | 1.00 |
| ex.6.2_s | 70.012 | 30.000 | Al0.714Zn0.286O1.357 | 0.80 |
| ex.6.3_s | 41.709 | 28.590 | Al0.8Zn0.2O1.4 | 0.50 |
| ex.6.4_s | 0.000 | 30.000 | Al1O1.5 | 0.00 |

The carriers obtained are characterized by means of XRD and, with the exception of the solid 6.4_s, which maintains the gamma-alumina structure, prove to prevalently consist of a spinel phase which, for the sake of simplicity, will be indicated as $ZnAl_2O_4$ with the presence of a ZnO phase in a quantity which increases with an increase in the ratio of ZnO/ $Al_2O_3$ used in the preparation. The materials thus prepared and characterized are adopted as a carrier of $Fe_2O_3$.

For the preparation of the solids, the following procedure is adopted:

30 g of the carrier previously prepared, are weighed. A solution is prepared, containing 65.054 g of Fe $(NO_3)_3*9H_2O$ in the amount of water necessary for obtaining a 1.5 M solution. The alumina is placed in a pear-shaped flask. The iron solution and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the table.

| | Composition |
|---|---|
| ex.6.1 | 30%FeO1.5*70%Al0.667Zn0.333O1.333 |
| ex.6.2 | 30%FeO1.5*70%Al0.714Zn0.286O1.357 |
| ex.6.3 | 30%FeO1.5*70%Al0.8Zn0.2O1.4 |
| ex.6.4 | 30%FeO1.5*70%Al1O1.5 |

Loop redox performances

The solids described in Examples 6.1 to 6.3, which XRD measurements describe as mainly consisting of hematite compounds dispersed on a carrier of the spinel type, are compared with the solid prepared as described in Example 6.4, which XRD measurements reveal to consist of hematite dispersed on alumina. The materials are subjected to a catalytic test with the procedure described above. The results obtained are indicated in the following table:

| Solid | Composition | dO | R% | H2/Cox | dOw | dOa | PHw N/H2/kgcat | EO Ow/(Ow+Oa) |
|---|---|---|---|---|---|---|---|---|
| ex.6.1 | 30%FeO1.5*70%Al0.667Zn0.333O1.333 | 1.70 | 0.19 | 1.15 | 1.22 | 0.85 | 17.09 | 0.59 |
| ex.6.2 | 30%FeO1.5*70%Al0.714Zn0.286O1.357 | 2.06 | 0.23 | 1.22 | 1.17 | 1.15 | 16.39 | 0.50 |
| ex.6.3 | 30%FeO1.5*70%Al0.8Zn0.2O1.4 | 2.44 | 0.27 | 1.42 | 1.02 | 1.5 | 14.29 | 0.40 |
| ex.6.4 | 30%FeO1.5*70%Al1O1.5 | 2.27 | 0.25 | 1.15 | 0.64 | 2.02 | 8.97 | 0.24 |

from which it can be observed that:

The modification of γ-alumina by the progressive addition of ZnO and subsequent addition of 30% of $Fe_2O_3$ causes a progressive improvement in the performances of the solid.

In particular, the following observations can be made:

A progressive increase in the productivity of $H_2$ and a progressive increase in the EO, efficiency of use of the oxygen exchanged. An excessive charge of ZnO causes a collapse in the activity of the solid in the reduction reaction with methane as shown by the low value of oxygen extracted in the reduction dO.

The example allows a composition range to be identified which is useful in the spinel component of the solid [Aa Dd Ee Oz].

In particular, ignoring the presence of contaminants E and therefore assuming e = 0, the formula which represents the composition of the carrier becomes AlaZn(1-a)Oz.

Useful a values 0.625 < a < 0.91; Optimal values 0.667 < a < 0.833.

## EXAMPLE 7

A series of solids is prepared, consisting of hematite deposited on carriers obtained by the modification of gamma alumina modified with different heteroatoms D wherein D = Mg, Zn, Co, Cu and for comparison a solid consisting of hematite deposited on alumina.

For the preparation of the carriers, the following procedure is adopted. 30 g of microspheroidal gamma alumina are weighed. A solution is prepared, containing a precursor of the modifying element whose nature and quantity are indicated in the following table. Said precursor is dissolved in the amount of water necessary for obtaining a 2M solution. The alumina is placed in a pear-shaped flask. The solution of the precursor of the modifying element and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the table.

|          | Reagent          | g       | Composition          | eO/Al2O |
|----------|------------------|---------|----------------------|---------|
| ex.7.1_s | Mg(CH3COO)2*4H2O | 51.17   | Al0.712Mg0.288O1.356 | 0.81    |
| ex.7.2_s | Zn(NO3)2*6H2O    | 70.0115 | Al0.714Zn0.286O1.357 | 0.80    |
| ex.7.3_s | Co(NO3)2*6H2O    | 68.502  | Al0.714Co0.286O1.357 | 0.80    |
| ex.7.4_s | Cu(NO3)2*3H2O    | 56.863  | Al0.714Cu0.286O1.357 | 0.80    |
| ex.7.5_s | - - -            | 0       | Al1O1.5              | 0       |

The materials thus prepared and characterized are used as a carrier of $Fe_2O_3$.

For the preparation of the solids, the following procedure is adopted:

30 g of the carrier previously prepared, are weighed. A solution is prepared, containing 65.054 g of Fe$(NO_3)_3$*9H$_2$O in the amount of water necessary for obtaining a 1.5 M solution. The carrier is placed in a pear-shaped flask. The iron solution and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the table.

|        | Composition                        |
|--------|------------------------------------|
| ex.7.1 | 30%FeO1.5*70%Al0.712Mg0.288O1.356  |
| ex.7.2 | 30%FeO1.5*70%Al0.714Zn0.286O1.357  |
| ex.7.3 | 30%FeO1.5*70%Al0.714Co0.286O1.357  |
| ex.7.4 | 30%FeO1.5*70%Al0.714Cu0.286O1.357  |
| ex.7.5 | 30%FeO1.5*70%Al1O1.5               |

The solids described in Examples 7.1 to 7.4, object of the present invention are compared with the solid prepared as described in Example 7.5, which XRD measurements reveal to consist of hematite dispersed on alumina. The materials are subjected to a catalytic test with the procedure described above. The results obtained are indicated in the following table:

| Solid | Composition | dO | R% | H2/Cox | dOw | dOa | PHw | EO |
|-------|-------------|------|------|--------|------|------|-------|------|
| ex.7.1 | 30%FeO1.5*70%Al0.712Mg0.288O1.356 | 2.63 | 0.29 | 1.15 | 1.59 | 1.04 | 22.27 | 0.60 |
| ex.7.2 | 30%FeO1.5*70%Al0.714Zn0.286O1.357 | 2.06 | 0.23 | 1.22 | 1.17 | 1.15 | 16.39 | 0.50 |
| ex.7.3 | 30%FeO1.5*70%Al0.714Co0.286O1.357 | 3.83 | 0.42 | 3.35 | 3.69 | 1.09 | 51.69 | 0.77 |
| ex.7.4 | 30%FeO1.5*70%Al0.714Cu0.286O1.357 | 8.73 | 0.97 | 4.51 | 2.99 | 1.09 | 41.89 | 0.73 |
| ex.7.5 | 30%FeO1.5*70%Al1O1.5 | 2.27 | 0.25 | 1.15 | 0.64 | 2.02 | 8.97 | 0.24 |

from which it can be observed that:

The modification of $\gamma$-alumina with Co, Cu, Mg, Zn and the subsequent addition of 30% of $Fe_2O_3$ allows solids to be obtained which provide better performances with respect to a solid in which $Fe_2O_3$ is dispersed directly on alumina. In particular, the following observations can be made:

An increase in the productivity of $H_2$ and a progressive increase in EO, efficiency of use of the oxygen exchanged.

With respect to the heteroatoms Co and Cu, which have higher productivity values of hydrogen, it should be pointed out that:

In the case of the material modified with Cu, the reduction reaction was prolonged for 14 minutes whereas for all the other materials the reduction was interrupted after 8 minutes. Both materials at the end of the reduction, have $H_2/CO_x$ ratios in the effluents higher than 3 which indicates the possible deposition of carbonaceous species by decomposition of the $CH_4$.

In the case of Cu, this is due to the prolonged reduction whereas in the case of Co, this occurs as a result of its greater reactivity. It is important to understand that in the oxidation phase with water, the presence of carbonaceous species on the reduced solid can give rise to the production of $CO_x$ species. The reduction reaction should therefore be carried out selecting reactor solutions, times and operating conditions which take into account both the desired productivity and purity of the hydrogen to be obtained.

EXAMPLE 8 - Effect of promoters

A series of solids is prepared, consisting of 30% of hematite as active redox phase and one or more promoter elements selected from Cr and Ce or a combination thereof and, for comparison, a solid consisting of 30% of hematite and without promoters. The redox phase is deposited on a carrier obtained by the modification of gamma alumina with MgO deposited on alumina.

For the preparation of the carrier, the following procedure is adopted:

The quantity of microspheroidal gamma alumina indicated in the table is weighed. A solution is prepared, containing the quantity of $Mg(CH_3COO)_2*4H_2O$ indicated in the table in the amount of water necessary for obtaining a 2M solution. The alumina is placed in a pear-shaped flask or alternatively in a container for preparations exceeding 100 g of solid. The same procedure is adopted as described in the previous examples until a dry solid is obtained. The solid is dried at 120°C for a night and thermally treated in a muffle in a light stream of air, with a temperature program which comprises a final step at 800°C.

| | gamma Al$_2$O$_3$ (g) | g(CH$_3$COO)$_2$*4H$_2$O (g) | Composition | MgO/Al$_2$O$_3$ |
|--------|------|--------|------|------|
| ex.8.1 s | 500 | 631.01 | Al0.769Mg0.231O1.385 | 0.60 |
| ex.8.2s | 30 | 51.17 | Al0.712Mg0.288O1.356 | 0.81 |
| ex.8.3s | 30 | 51.17 | Al0.712Mg0.288O1.356 | 0.81 |
| ex.8.4s | 30 | 51.17 | Al0.712Mg0.288O1.356 | 0.81 |

The carrier thus prepared is used as carrier of the active $Fe_2O_3$ redox phase to which $Cr_2O_3$, $CeO_2$, or a combination thereof, is added as oxide promoter. The % weight of $Fe_2O_3$ is maintained constant at 30%.

For the preparation of the solids, the following procedure is adopted:

The quantity of carrier previously prepared indicated in the following table, is weighed. A solution is prepared, containing the quantity of $Fe(NO_3)_3*9H_2O$ and optionally a soluble precursor of the promoter whose nature and quantity are specified in the following table. The salts are dissolved in the amount of water necessary for obtaining a 1.5 M solution. The carrier is placed in a pear-shaped flask or alternatively in a container for preparations exceeding 100 g of solid. The same procedure is adopted as described in the previous examples until a dry solid is obtained. The solid is dried at 120°C for a night and thermally treated in a muffle in a light stream of air, with a temperature program which comprises a final step at 800°C. The end composition is indicated in the following table.

| | | Reagent | g | Carrier | Composition |
|---|---|---|---|---|---|
| ex. 8.1 | Fe(NO$_3$)$_3$*9H$_2$O | 910.75 | 300 | 50%(Fe0.736Cr0.064Ce0.199O1.600)* |
| | Ce(NO$_3$)$_3$*6H$_2$O | 264.88 | | 50%(Al0.769Mg0.231O1.3) |
| | Cr (NO$_3$)$_3$*9H$_2$O | 78,97 | | |
| ex.8.2 | Fe(NO$_3$)$_3$*9H$_2$O | 67.45 | 30 | 32.48%[Fe0.92Cr0.08O1.5]* |
| | Cr(NO$_3$)$_3$*9H$_2$O | 5.81 | | 67.52%[Al0.712Mg0.288O1.356] |
| ex.8.3 | Fe(NO$_3$)$_3$*9H$_2$O | 67.46 | 30 | 32.50%[Fe0.963Ce0.037O1.519]* |
| | Ce(NO$_3$)$_3$ *6H$_2$O | 2.80 | | 67.50%[Al0.712Mg0.288O1.356] |
| ex. 8.4 | Fe(NO$_3$)$_3$*9w | 65.05 | 30 | 30% [Fe0.15]*70%[AlO.712Mg0.288O1.356] |

The solids described in examples 8.1 to 8.4, object of the present invention are subjected to a catalytic test with the procedure described above. The results obtained are indicated in the following table.

| Solid | Composition | dO | R% | H2/COx | dOw | dOa | PHw | EO |
|---|---|---|---|---|---|---|---|---|
| ex.8.1 | 50%(Fe0.736Cr0.064Ce0.199O1.600)* | 1.38 | 0.15 | 0 | | | | |
| | 50%(Al0.769Mg0.231O1.38) | 1.99 | 0.22 | 0 | | | | |
| | | 2.20 | 0.24 | 0.83 | | | | |
| | | 2.41 | 0.27 | 0.98 | | | | |
| | | 2.66 | 0.29 | 1.11 | | | | |
| | | 3.09 | 0.34 | 1.61 | 1.48 | 1.34 | 20.73 | 0.52 |
| ex.8.2 | 32.48%(Fe0.920Cr0.080O1.500)* | 1.85 | 0.21 | 0 | | | | |
| | 67.52%(Al0.712Mg0.288O1.356) | 2.28 | 0.25 | 0.75 | | | | |
| | | 2.87 | 0.32 | 1.84 | 1.98 | 1.0 | 27.74 | 0.66 |
| ex.8.3 | 30%(Fe0.963Ce0.037O1.520)* | 1.53 | 0.17 | 0 | | | | |
| | 67.5%(Al0.741 Mg0.259O1.370) | 1.95 | 0.22 | 0.91 | | | | |
| | | 2.35 | 0.26 | 1.19 | 1.35 | 1.0 | 18.91 | 0.57 |
| ex.8.4 | 30%(FeO1.5)*70% (Al0.755Mg0.245O1.377) | 1.31 | 0.15 | 0 | | | | |
| | | 1.72 | 0.19 | 1.13 | | | | |
| | | 2.06 | 0.23 | 1.22 | 1.17 | 1.15 | 16.39 | 0.50 |

from which it can be observed that the addition of promoters to the basic formulate (Example 8.4) causes an increase in the hydrogen productivity.

The addition of chromium (Example 8.2) with respect to the non-promoted formulate (8.4) allows the best H$_2$ productivities to be obtained resulting from a greater reduction reactivity. With the same reduction time (8 minutes), the oxygen extracted is in fact 2.87% for the promoted formulate whereas it is 2.06 for the non-promoted formulate.

The addition of cerium (Example 8.3) with respect to the non-promoted formulate shows a greater reducibility. With the same reduction time (8 minutes), the oxygen extracted is in fact 2.35% for the promoted formulate whereas it is 2.06 for the non-promoted formulate. The H$_2$/CO$_x$ ratio (1.19) is maintained at lower values than those observed on the non-promoted solid (1.22) and on the solid promoted with Cr (1.84).

The simultaneous addition of cerium and chromium allows improved hydrogen productivities and oxygen efficiencies to be obtained compared with the case of non-promoted material.

EXAMPLE 9 Iron charge

A series of solids is prepared, consisting of hematite as active redox phase in a quantity increasing from 30 to 50% wt on a carrier obtained by the modification of gamma alumina with ZnO. For the preparation of the carriers, the following procedure is adopted.

30 g of microspheroidal gamma alumina are weighed. A solution is prepared with 70.011 g of $Zn(NO_3)_2*6H_2O$ dissolved in the amount of water necessary for obtaining a 2M solution. The alumina is placed in a pear-shaped flask. The zinc solution and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is as follows

Al 0.714 Zn 0.286 O 1.357 wherein $ZnO/Al_2O_3 = 0.80$

The solid thus obtained is used as carrier of the active $Fe_2O_3$ redox phase, charged on the carrier in quantities ranging from 30 to 50%. For the preparation of the solids, the following procedure is adopted:

30 g of the carrier previously prepared, are weighed. A solution is prepared, containing $Fe(NO_3)_3*9H_2O$ in the quantity indicated in the table, dissolved in the amount of water necessary for obtaining a 1.5 M solution. The carrier is placed in a pear-shaped flask. The solution containing the iron salt and 10 balls of ceramic material (diameter 2 cm) are added, which serve to keep the suspension well mixed. The flask is connected to a rotavapor and rotated under heat and under vacuum until complete evaporation. The solid is dried at 120°C for a night and thermally treated in a muffle in a light stream of air, with a temperature program which comprises a final step at 800°C. The end composition of the solids is indicated in the following table.

| Ex. | gr $Fe(NO_3)_3*9H_2O$ | Composition |
|---|---|---|
| ex.9.1 | 65.054 | 30%FeO1.5*70%Al0.714Zn0.286O1.357 |
| ex.9.2 | 101.195 | 40%FeO1.5*70%Al0.714Zn0.286O1.357 |
| ex.9.3 | 151.792 | 50%FeO1.5*70%Al0.714Zn0.286O1.357 |

The solids described in Examples 9.1 to 9.4, object of the present invention, are subjected to a catalytic test with the procedure described above. The results obtained are indicated in the following table.

In particular, for the solid indicated in Example 9.1, the reduction with methane was prolonged for 17 minutes whereas for the solid indicated in Example 9.2, the reduction was continued for 29 minutes.

| Solid | Composition | dO | R% | H2/COx | dOw | dOa | PHw | EO |
|---|---|---|---|---|---|---|---|---|
| ex.9.1 | 30%FeO1.5*70%Al0.714Zn0.286O1.357 | 1.31 | 0.15 | 0.00 | 0.31 | 1.00 | 4.41 | 0.24 |
| | | 1.66 | 0.18 | 1.19 | 0.66 | 1.00 | 9.25 | 0.40 |
| | | 1.98 | 0.22 | 1.20 | 0.98 | 1.00 | 13.67 | 0.49 |
| | | 2.24 | 0.25 | 1.29 | 1.24 | 1.00 | 17.44 | 0.55 |
| | | 2.51 | 0.28 | 1.44 | 1.51 | 1.00 | 21.21 | 0.60 |
| | | 2.73 | 0.30 | 1.80 | 1.73 | 1.00 | 24.27 | 0.63 |

(continued)

| Solid | Composition | dO | R% | H2/COx | dOw | dOa | PHw | EO |
|-------|-------------|-----|-----|--------|------|------|-------|------|
| ex.9.2 | 40%FeO1.5*60%Al0.714Zn0.286O1.357 | 1.33 | 0.11 | 0.00 | 0.00 | 1.33 | 0.00 | 0.00 |
| | | 1.61 | 0.13 | 1.01 | 0.27 | 1.34 | 3.77 | 0.17 |
| | | 1.90 | 0.16 | 1.05 | 0.56 | 1.34 | 7.81 | 0.29 |
| | | 2.16 | 0.18 | 1.07 | 0.82 | 1.34 | 11.45 | 0.38 |
| | | 2.40 | 0.20 | 1.08 | 1.06 | 1.34 | 14.89 | 0.44 |
| | | 2.62 | 0.22 | 1.23 | 1.28 | 1.34 | 17.89 | 0.49 |
| | | 2.82 | 0.23 | 1.36 | 1.48 | 1.34 | 20.78 | 0.53 |
| | | 3.05 | 0.25 | 1.48 | 1.71 | 1.34 | 24.00 | 0.56 |
| | | 3.28 | 0.27 | 1.62 | 1.94 | 1.34 | 27.21 | 0.59 |
| | | 3.53 | 0.29 | 1.73 | 2.19 | 1.34 | 30.62 | 0.62 |
| ex.9.3 | 50%FeO1.5*50%Al0.714Zn0.286O1.357 | 0.99 | 0.07 | 0 | 0.00 | 0.99 | 0.00 | 0.00 |
| | | 2.01 | 0.13 | 0 | 0.36 | 1.65 | 5.04 | 0.18 |
| | | 2.27 | 0.15 | 0.96 | 0.62 | 1.65 | 8.69 | 0.27 |

from which it can be observed:

that the quantity of oxygen exchanged with air does not depend on the reduction level reached by the solid in the reaction step with methane, but coincides with a close approximation with the expected quantity for the oxidation of

$$Fe_3O_4 \rightarrow Fe_2O_3;$$

that consequently the quantity of oxygen exchanged with water or the productivity of $H_2$ increases with an increase in the reduction degree of the solid which is reached in the reaction step with methane.

The reduction of the solid cannot be prolonged indefinitely. It has been observed in fact that on over-reduced solids, i.e. solid for which the $H_2/CO_x$ ratio between the effluent species exceeds the limit value of 2, the reduction proceeds with the progressive deposition of carbonaceous species on the solid. These species, in the oxidation phase with water, can give rise to the production of $CO_x$ species. The reduction reaction should consequently be effected selected suitable reactor solutions, times and operating conditions.

An increase in the charge of $Fe_2O_3$, or of the active redox phase allows the quantity of exchangeable oxygen to be increased and consequently the $H_2$ productivity compatibly with the necessity of adequately reducing the solid.

For example, the solid at 30% of $Fe_2O_3$ (Example 9.1) has a productivity of 24.3 NlH$_2$/Kg of solid after a reduction time of 17 minutes.

The solid at 40% of $Fe_2O_3$ (Example 9.2) has a productivity of 30.6 NlH$_2$/Kg of solid after a reduction time of 29 minutes.

Alternatively an increase in the charge of the active redox phase allows the same productivity level to be obtained with solids at a lower reduction % and consequently with a lower $H_2/CO_x$ ratio.

For example, the solid at 40% of $Fe_2O_3$ (Example 9.1) has a productivity of 24.0 NlH$_2$/Kg of solid after a reduction time of 23 minutes.

Under these conditions, the reduction degree of the solid R is equal to 0.25 and the $H_2/CO_x$ ratio is equal to 1.48.

The reduction can therefore be carried out under more controlled conditions and with a lesser risk of producing hydrogen contaminated by $CO_x$ in the subsequent oxidation step with water, due to over-reduction of the solid.

EXAMPLE 10

As demonstrated in the previous examples, the formulates, object of the present invention can be advantageously used in the production of hydrogen with a redox process.

With reference to the active solid component alone, when this consists of iron oxide, ignoring the role of the promoters and possible interactions of the active phase with the carrier, we can assume (without there being any limitation in this respect and for the sole purpose of better illustrating the behaviour of the solid) that the species involved in the redox cycle are:

MOa $\quad$ $Fe_2O_3$ hematite = $FeO1.5$ $\quad$ a = 1.500

MOw $\quad$ $Fe_3O_4$ magnetite = $FeO4/3$ $\quad$ w = 1.333

The reduction with methane can be extended up to wustite, a non-stoichiometric solid whose composition is indicated as FeOr with 1<r<1.19 or can be further continued to metallic Fe, on the condition that all the reactor expedients are used together with process variables which allow $CO_2$ and $H_2O$ to be obtained as reaction products. The latter requisite is particularly important when $CO_2$ is to be segregated in a concentrated stream.

Let us assume that the reduction is extended until the formation of FeO.9470

MOr $\quad$ FeO.9470 wustite = $FeO1.056$ $\quad$ r = 1.056

The thermal tonality of the overall reaction and efficiency of the cycle, expressed by the ratio ($H_2$ produced) /($CH_4$ fed) depend on the advancement degree of the oxidation reaction effected in R3.

By applying the definitions previously specified, the following are obtained

Advancement degree $\varepsilon$ which has values within the range of $0 \leq \varepsilon \leq 1$

Stoichiometric coefficient o which has values within the range of

$1.333 \leq o \leq 1.5$

Oxygen exchanged in the oxidation reactor with air $\delta o$ = (o-w), which has values within the range of

$0 \leq \delta o \leq 0.167$

Oxygen exchanged in the reduction reactor $\delta r$ = (o-r), which has values within the range of

$0.277 \leq \delta r \leq 0.444$

The ratio $H_2$ produced/$CH_4$ fed and the thermal tonality of a whole redox cycle are determined by applying equations (I) and (II) and therefore prove to be:

$$CH_4 + [(4\delta w/\delta r)-2]H_2O + (2\delta o/\delta r)O_2 \rightarrow CO_2 + (4\delta w/\delta r)\ H_2 \qquad \text{equation (I)}$$

$$\Delta H_{tot} = [\Delta H_{2,g} + 4\delta w/\delta r\ \Delta H_{1,g}] \qquad \text{equation (II)}$$

The results are indicated in the following table in relation to the advancement degree $\varepsilon$ of the oxidation reaction of the solid effected in the reactor R3.

| $\varepsilon$ | $H_2/CH_4$ | DH Kcal |
|---|---|---|
| 0.00 | 4.00 | 39.5 |
| 0.20 | 3.57 | 14.70 |
| 0.343 | 3.32 | 0.00 |
| 0.60 | 2.94 | -21.77 |
| 0.70 | 2.82 | -28.95 |
| 0.80 | 2.70 | -35.56 |
| 1.00 | 2.50 | -47.28 |

The cycle schematized can consequently be carried out in various ways by simply controlling the advancement degree of the oxidation reaction of the solid in the reactor R3.

In particular, it is possible:

with $\varepsilon$ < 0.343 to optimize the efficiency, thus accepting the endothermicity of the cycle

with $\varepsilon$ = 0.343 to operate with a thermal balance equal to zero

with $\varepsilon$ = 1 to obtained the maximum heat export.

On the condition that all the reactor and process expedients are adopted and that the solid is brought to an oxidation state which is such as to allow $CO_2$ and $H_2O$ to be obtained as reaction products, the cycle produces a stream of $CO_2$ and $H_2O$ from which $CO_2$ can be easily segregated.

On the basis of the previous consideration, experts in the field are capable of establishing each time to which advancement degree the reaction should be brought in R3 by optimizing, according to the demands, the efficiency and thermal self-sufficiency of the cycle.

EXAMPLE 11

As demonstrated in the previous examples, the formulates, object of the present invention, allow the effective reduction of $Fe_2O_3$ with methane to be obtained. Let us now refer to the active solid component alone, when this consists of iron oxide, ignoring the role of promoters and possible interactions of the active phase with the carrier, without there being any limitation in this respect and for the sole purpose of better illustrating the behaviour of the solid.
Let us assume that the cycle is carried out with the total oxidation of the solid in the reactor R3, i.e. to proceed with an advancement degree $\varepsilon=1$, and consequently under such conditions that MOo = MOa.
The species involved in the redox cycle are therefore

MOo = MOa      $Fe_2O_3$ hematite = FeO1.5      o=a=1.500
MOw      $Fe_3O_4$ magnetite = FeO4/3      w=1.333
MOr      Fe0.9470 wustite = FeO1.056      r=1.056

The reduction with methane can be extended to wustite, a non-stoichiometric solid whose composition is indicated with FeOr with 1<r<1.19 or can be further continued to metallic Fe, on the condition that all the reactor expedients are adopted together with the process variables which allow $CO_2$ and $H_2O$ to be obtained as reaction products. The latter requisite is particularly important when $CO_2$ is to be segregated in a concentrated stream.
Assuming that the reduction is extended to the formation of Fe0.9470, the reactions which involve the solid and the relative reaction heat values are:
In the reactor R2

$$MOo \rightarrow MOr + \delta r[O]$$

$$FeO1.5 \rightarrow FeO1.056 + 0.444\ [O] \qquad \Delta H_{2,}\ s = 34.95\ kcal/moleM$$

In the reactor R1

$$MOr + \delta w[O] \rightarrow MOw$$

$$FeO1.056 + 0.277\ [O] \rightarrow FeO1.333 \qquad \Delta H_1,\ s = -23.6\ kcal/moleM$$

In the reactor R3

$$MOw + \delta a[O] \rightarrow MOa$$

$$FeO1.333 + 0.167\ [O] \rightarrow FeO1.5 \qquad \Delta H_3, s = -11.35\ kcal/moleM$$

It is known that a better definition of the heat absorbed/generated by the oxide-reduction of the solid should also comprise the quantity of heat relating to the variation in the thermal capacity of the solid at a constant pressure for the variation in temperature induced in the reagent mass; this latter quantity of heat however is normally modest with respect to the variation in the formation heat measured under standard conditions, and consequently the reaction heat values indicated above represent with a sufficient approximation the thermodynamic characteristic of the material and can therefore be used for the calculation of the weight and thermal balance.
Using with these expedients for reactions in gas phase, the reaction heat values indicated in the previous scheme (The Thermodynamics of Organic Compounds - D. Stull, E. Westrum) and for reactions in solid phase, the reaction heat values indicated above,
the overall stoichiometry and thermal tonality of a whole redox cycle are determined by applying equations (I) and (II) and therefore prove to be:

$$CH_4 + [(4\delta w/\delta r)\text{-}2]H_2O + (2\delta o/\delta r)O_2 \rightarrow CO_2 + (4\delta w/\delta r)\ H_2 \qquad\qquad \text{equation (I)}$$

$$\Delta H_{tot} = [\Delta H_{2,g} + 4\delta w/\delta r \; \Delta H_{1,g}] \qquad\qquad \text{equation (II)}$$

from which the following stoichiometry is obtained:

$$CH_4 + 0.5H_2O + 0.75O_2 \rightarrow CO_2 + 2.5H_2 \qquad\qquad \text{equation (I)}$$

The overall thermal tonalities of the single steps referring to 1 mole of methane transformed are the following:

Reactor 2: $\Delta H_{1,tot}$ = 123.14 Kcal endothermic
Reactor 1: $\Delta H_{2,tot}$ = -68.2 Kcal exothermic
Reactor 3: $\Delta H_{3,tot}$ = -102.2 Kcal exothermic

The overall thermal tonality of the cycle is therefore

$$\Delta H_{cy,\, tot} = \text{-47.3 Kcal exothermic} \qquad\qquad \text{equation (II)}$$

The cycle schematized thus allows in theory:

- 2.5 moles of $H_2$ to be obtained per mole of $CH_4$ consumed
- a reaction enthalpy to be available, which can be advantageously exploited
- a stream of $CO_2$ and $H_2O$ to be produced from which $CO_2$ can be easily segregated.

**Claims**

1. A catalytic system consisting of an active component based on iron and a microspheroidal carrier based on alumina and is represented by the following formula

$$[Fe_{x1} \; M_{x2} \; Q_{x3} \; D_{x4} \; Al_{x5}] \; O_y \qquad\qquad (1)$$

wherein
xi with i=1.5 represent the atomic percentages assuming values which satisfy the equation $\Sigma xi = 100$.
y is the value required by the oxidation number with which the components are present in the formulate,
x1 is the atomic percentage with which Fe is present in the formulate and ranges from 5 to 80,
M is Cr and/or Mn,
x2 ranges from 0 to 30,
Q is La, Lanthanides, Zr or a combination thereof,
x3 ranges from 0 to 30,
D is Mg, Ca, Ba, Co, Ni, Cu, Zn or combinations thereof,
x4 ranges from 0 to 35,
x5 is the atomic percentage with which A1 is present in the formulate and ranges from 20 to 95.

2. The catalytic system according to claim 1, wherein
x1 ranges fro 20 to 50,
x2 ranges from 0 to 10,
x3 ranges from 0 to 10,
x4 ranges from 5 to 25,
x5 ranges from 50 to 80.

3. The catalytic system according to claim 1, represented by the following formula

$$(w)[Fe_f M_m Q_q R_r O_x]^*(100\text{-}w)[Al_a D_d E_e O_z] \qquad\qquad (2)$$

wherein

$[Fe_fM_mQ_qR_rO_x]$ represents the active solid component,

w the weight percentage of the active component,

Fe, M, Q, R represent the elements forming the active part,

f, m, q, r the atomic fractions with which these are present in the component,

x is the value required by the oxidation number that the elements Fe, M, Q, R have in the formulate.

w ranges from 10 to 80%,

f ranges from 0.5 to 1,

M is Cr and/or Mn,

m ranges from 0 to 0.5,

Q is selected from La, Lanthanides, Zr or a combination thereof,

q ranges from 0 to 0.5,

R can be one or more elements selected from A1, D or a combination thereof,

r ranges from 0 to 0.1

and wherein

[Ala Dd Ee Oz] is the carrier on which the active phase is suitably dispersed,

A1, D, E represent the elements forming the carrier,

a, d, e the atomic fractions with which these are present in the carrier,

a ranges from 0.625 to 1,00,

D is an element selected from Mg, Ca, Ba, Zn, Ni, Co, Cu,

d ranges from 0 to 0.375,

E is an element selected from Fe, M, Q, or a combination thereof, e ranges from 0 to 0.1.

4. The catalytic system according to claim 3 wherein

w ranges from 20 to 60%,

f ranges from 0.6 to 1,

a ranges from 0.667 to 0.91,

d ranges from 0.09 to 0.333.

5. The catalytic system according to claim 1 or 3, wherein the Lanthanide is cerium.

6. The catalytic system according to claim 3, wherein the carrier, before being modified with the active component, corresponds to the formulation

$$[Al_aD_{(1-a)}O_z] \tag{3}$$

wherein

A1, D represent the elements forming the carrier,

a is the atomic fraction of aluminum, the prevalent component of the carrier

z is the value required by the oxidation number that the elements A1 and D have in the formulate

D is an element selected from Mg, Ca, Zn, Ni, Co, Cu.

7. The catalytic system according to claim 6, wherein the carrier before being modified with the active component has the formulation

$$Al_aMg_{(1-a)}O_z \tag{4}$$

wherein

a ranges from 0.625 to 0.91 corresponding to a ratio $p=MgO/Al_2O_3$ ranging from 0.2 to 1.2,

and structurally consists of

- a compound with a spinel structure which is conventionally indicated as $pMgO*Al_2O_3$,
- optionally MgO.

8. The catalytic system according to claim 7, wherein a ranges from 0.667 to 0.833, corresponding to a ratio MgO/

$Al_2O_3$ ranging from 0.4 to 1.

9. The catalytic system according to claim 6, wherein the carrier before being modified with the active component has the formulation

$$Al_aZn_{(1-a)}O_z \qquad\qquad (5)$$

wherein
a ranges from 0.625 to 0.91 corresponding to a ratio $p=ZnO/Al_2O_3$ ranging from 0.2 to 1.2, and structurally consists of

- a compound with a spinel structure which is conventionally indicated as $pZnO*Al_2O_3$,
- optionally ZnO.

10. The catalytic system according to claim 9, wherein a ranges from 0.667 to 0.833 corresponding to a ratio $ZnO*Al_2O_3$ ranging from 0.4 to 1.

11. The catalytic system according to claim 3, also containing a further promoter T,
whose quantity is expressed as mg T metal/Kg formulate and indicated with t,
wherein T can be selected from Rh, Pt, Pd or a combination thereof,
wherein t has values ranging from 1 to 1000 mg metal/Kg formulate.

12. The catalytic system according to claim 11, wherein t has values ranging from 10 to 500 mg metal/Kg formulate.

13. A process for the preparation of a catalytic system according to one of the claims from 1 to 10 comprising:

- modifying a microspheroidal alumina by means of atomization on said microspheroidal alumina of an impregnating solution containing one or more of the elements D, selected from Mg, Ca, Ba, Co, Ni, Cu and/or Zn, maintaining said microspheroidal alumina at such a temperature as to allow the contemporaneous evaporation of the excess solvent and by subsequent thermal treatment at a temperature ranging from 500 to 900°C, preferably from 700 to 800°C, obtaining said modified alumina, structurally consisting of a compound with a spinel structure and possibly at least one oxide of the element D;
- further modifying said modified alumina by means of atomization on said modified alumina of an impregnating solution containing Fe and optionally the element M, selected from Cr and/or Mn, and/or the element Q, selected from La, Lanthanides and/or Zr, maintaining said modified alumina at such a temperature as to allow the contemporaneous evaporation of the excess solvent and by subsequent thermal treatment at a temperature ranging from 500 to 900°C, preferably from 700 to 800°C, obtaining the desired catalytic system.

14. A process for the production of hydrogen comprising the following operations:

- oxidation of a solid in a first reaction zone (R1) in which water enters and $H_2$ is produced;

- heat supply by exploiting the heat developed by further oxidation of the solid with air in a supplementary thermal support unit (R3);

- passage of the oxidized form of the solid to a reaction zone (R2) into which a hydrocarbon is fed, which reacts with said oxidized form of the solid, leading to the formation of its combustion products: carbon dioxide and water;

- recovery of the reduced form of the solid and its feeding to the first reaction zone (R1);

the solid, the catalytic system according to one of the claims from 1 to 10,
and the three zones (R1), (R2) and (R3) being connected by transport lines (10), (9) and (8) which send:

- the reduced solid leaving the second reaction zone (R2) to the first reaction zone (R1) (10);
- the oxidized solid to the supplementary thermal support unit (R3) (9);

- the heated solid back to the second reaction zone (R2) (8) .

# Fig.1

# Fig.2

European Patent
Office

## EUROPEAN SEARCH REPORT

Application Number

EP 04 07 5258

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 944 810 A (UNIVERSAL OIL PROD CO) 18 December 1963 (1963-12-18) * page 3, line 54 - page 4, line 77 * * figure * --- | 1,14 | B01J23/745 B01J23/78 B01J23/80 B01J23/83 C01B3/06 |
| X | US 4 790 982 A (RADLOWSKI CECELIA A ET AL) 13 December 1988 (1988-12-13) | 1-6,13 | |
| A | * column 5, line 54 - line 58 * * examples 6,13 * --- | 7,8 | |
| D,X | EP 1 134 187 A (SNAM PROGETTI) 19 September 2001 (2001-09-19) * paragraph [0026] - paragraph [0031] * * example 6 * --- | 1,3,5, 11,12,14 | |
| A | US 4 308 173 A (FUJIMORI KUNIAKI ET AL) 29 December 1981 (1981-12-29) * claims 1-10 * * column 5, line 24 - column 8, line 29 * * examples 1-7 * --- | 1-8 | |
| A | US 4 256 722 A (CARRIER GERALD B) 17 March 1981 (1981-03-17) * the whole document * ----- | 13 | TECHNICAL FIELDS SEARCHED (Int.Cl.7) B01J C01B |

The present search report has been drawn up for all claims

| Place of search | Date of completion of the search | Examiner |
|---|---|---|
| THE HAGUE | 10 May 2004 | Zuurdeeg, B |

EPO FORM 1503 03.82 (P04C01)

**ANNEX TO THE EUROPEAN SEARCH REPORT
ON EUROPEAN PATENT APPLICATION NO.**

EP 04 07 5258

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2004

| Patent document cited in search report | | Publication date | Patent family member(s) | | Publication date |
|---|---|---|---|---|---|
| GB 944810 | A | 18-12-1963 | DE | 1231219 B | 29-12-1966 |
| | | | FR | 1266230 A | 07-07-1961 |
| US 4790982 | A | 13-12-1988 | AT | 82706 T | 15-12-1992 |
| | | | AU | 620178 B2 | 13-02-1992 |
| | | | AU | 4583689 A | 05-04-1990 |
| | | | AU | 594766 B2 | 15-03-1990 |
| | | | AU | 7281587 A | 09-11-1987 |
| | | | BR | 8707261 A | 19-04-1988 |
| | | | CA | 1293967 C | 07-01-1992 |
| | | | DE | 3782797 D1 | 07-01-1993 |
| | | | DE | 3782797 T2 | 29-04-1993 |
| | | | EP | 0263171 A1 | 13-04-1988 |
| | | | JP | 2767539 B2 | 18-06-1998 |
| | | | JP | 6210177 A | 02-08-1994 |
| | | | JP | 7029054 B | 05-04-1995 |
| | | | JP | 1500250 T | 02-02-1989 |
| | | | WO | 8706157 A1 | 22-10-1987 |
| | | | US | 4963520 A | 16-10-1990 |
| EP 1134187 | A | 19-09-2001 | IT | MI20000551 A1 | 17-09-2001 |
| | | | IT | MI20002775 A1 | 21-06-2002 |
| | | | CA | 2340822 A1 | 17-09-2001 |
| | | | EP | 1134187 A2 | 19-09-2001 |
| | | | US | 2001055559 A1 | 27-12-2001 |
| US 4308173 | A | 29-12-1981 | JP | 1273077 C | 11-07-1985 |
| | | | JP | 55124542 A | 25-09-1980 |
| | | | JP | 59051336 B | 13-12-1984 |
| | | | AU | 521691 B2 | 22-04-1982 |
| | | | AU | 5673480 A | 25-09-1980 |
| | | | CA | 1142163 A1 | 01-03-1983 |
| | | | DE | 3064728 D1 | 13-10-1983 |
| | | | EP | 0016648 A1 | 01-10-1980 |
| US 4256722 | A | 17-03-1981 | NONE | | |

EPO FORM P0459